# EUROPÄISCHE PATENTSCHRIFT

(11) **EP 2 139 658 B1**
(45) Veröffentlichungstag und Bekanntmachung des Hinweises auf die Patenterteilung: **08.03.2017**
(21) Anmeldenummer: 08717980.0
(22) Anmeldetag: 18.03.2008
(51) Int. Cl.: B29C 44/58, B29C 44/04, B29L 9/00, B29K 101/12

(54) **VERFAHREN ZUR HERSTELLUNG VON GESCHÄUMTEN KUNSTSTOFFTEILEN**
METHOD FOR PRODUCING FOAMED PLASTIC PARTS
PROCÉDÉ PERMETTANT DE FABRIQUER DES ÉLÉMENTS EN PLASTIQUE EXPANSÉ

(30) Priorität: 26.03.2007 EP 07104872
(43) Veröffentlichungstag der Anmeldung: 06.01.2010
(73) Patentinhaber: ENGEL AUSTRIA GmbH, 4311 Schwertberg (AT); Georg Kaufmann Formenbau AG, 5453 Busslingen (CH); P-Group SRL Italia, 44100 Ferrara (IT)
(72) Erfinder: VÖLKEL, Mark, 68526 Ladenburg (DE); PIZZATI, Gianluca, I-22070 Senna Comasco (IT); SUTER, Hans, CH-5445 Eggenwill (CH); FISCHER, Michael, A-4030 Linz (AT)
(74) Vertreter: Torggler & Hofinger Patentanwälte
(86) Internationale Anmeldenummer: PCT/EP2008/053249
(87) Internationale Veröffentlichungsnummer: WO 2008/116800

(56) Entgegenhaltungen:
- EP-A1- 0 887 168
- DE-A1- 1 529 959
- DE-A1- 2 544 046
- GB-A- 927 501
- GB-A- 1 360 133
- JP-A- 58 197 029
- JP-A- 59 109 335
- JP-A- H10 315 262

## Beschreibung

Die Erfindung betrifft ein Verfahren zur Herstellung von geschäumten Kunststoffteilen mit einer äußeren festen Haut und einem geschäumten Kern, wobei die äußere Haut und der geschäumte Kern aus dem gleichen Polymer gefertigt sind.

Derartige geschäumte Kunststoffteile mit einer äußeren festen Haut und einem geschäumten Kern werden zum Beispiel als Instrumententafeln in Kraftfahrzeugen eingesetzt. An die Oberfläche derartiger geschäumter Kunststoffteile werden hohe Anforderungen gestellt, insbesondere wenn diese sichtbar im Kraftfahrzeug verbaut sind. Dies bedeutet zum Beispiel, dass die Oberfläche keine Anzeichen von Gasblasen oder Vertiefungen enthalten darf. Auch ist es erforderlich, dass die äußere Haut im Wesentlichen über das gesamte Bauteil gleich dick ist.

Die Herstellung eines derartigen geschäumten Kunststoffteils ist zum Beispiel in US-A 2005/0230861 beschrieben. Hierbei wird eine Polymerschmelze, die einen Schaumbildner enthält, in ein Spritzgusswerkzeug eingespritzt. An seiner Oberfläche wird die Kunststoffschmelze schnell abgekühlt, so dass diese aushärtet, bevor sie aufschäumen kann. Anschließend wird die Form langsam geöffnet, um der nicht ausgehärteten Kunststoffschmelze zu ermöglichen, aufzuschäumen. Nachteil dieses Verfahrens ist jedoch, dass nur eine sehr dünne äußere Haut erzeugt wird. Zudem ist es möglich, dass sich aufgrund des Aufschäumens Vertiefungen an der Außenhaut bilden. Eine gleichmäßige durchgängige porenfreie Oberfläche wird nicht erzeugt.

Aufgabe der vorliegenden Erfindung ist es daher, ein Verfahren bereitzustellen mit dem ein geschäumtes Kunststoffteil mit einer festen äußeren Haut und einem geschäumten Kern hergestellt werden kann, wobei die äußere Haut den Qualitätsanforderungen an eine sichtbare Oberfläche im Automobilbau genügt.

Gelöst wird die Aufgabe durch ein Verfahren zur Herstellung von geschäumten Kunststoffteilen mit einer äußeren festen Haut und einem geschäumten Kern, gemäß Anspruch 1. Die äußere Haut und der geschäumte Kern sind aus dem gleichen Polymer gefertigt. Das Verfahren umfasst folgende Schritte:
a) Entgasen einer ersten Menge einer treibmittelhaltigen Polymerschmelze,
b) Einspritzen der in Schritt (a) entgasten ersten Menge der Polymerschmelze und einer zweiten Menge der treibmittelhaltigen Polymerschmelze in eine Formkavität in einem Werkzeug,
c) Aufschäumen der treibmittelhaltigen Polymerschmelze.

Aus der in Schritt (a) entgasten ersten Menge der treibmittelhaltigen Polymerschmelze wird die äußere feste Haut des geschäumten Kunststoffteiles gebildet. Durch das Entschäumen lässt sich eine definierte Menge an entgastem Polymer bereitstellen, um eine vorgegebene Dicke der festen Haut zu erzielen. Auf diese Weise wird eine äußere feste Haut erzeugt, die den ästhetischen Anforderungen an das herzustellende geschäumte Kunststoffteil genügt.

Als Polymere für das geschäumte Kunststoffteil eignen sich zum Beispiel thermoplastische Polymere, insbesondere thermoplastische Elastomere (TPE). Besonders bevorzugt sind thermoplastische Polyurethane (TPU), thermoplastische Polyolefinelastomere (TPO) zum Beispiel Polyethylen, Ethylencopolymere, Ethylen-Propylen-Dienmonomer-Kautschuk (EPM-Kautschuk) usw., thermoplastische Kautschukvulkanisate (TPV) wie NBR/Polyolefin-Mischungen, EPTM/PP-Mischungen usw., thermoplastische Polyamide (TPA), thermoplastische Copolyester (TPC), deren Mischungen oder Legierungen mit Acrylaten, thermoplastische Styrolelastomere (TPS) wie Styrol-Butadien-Blockcopolymer (SBS) oder Styrol-Ethylen-Butadien-Blockcopolymer (SEBS), Styrol-Ethylen-Propylen-Blockcopolymer (SEPS), Styrol-Isopren-Blockcopolymer (SIS), Ethylvinylacetat (EVA) und deren Legierungen und Mischungen.

Als Treibmittel können alle dem Fachmann bekannten Treibmittel eingesetzt werden, mit denen sich eine Polymerschmelze zu einem Kunststoffschaum aufschäumen lässt. Bevorzugt als Treibmittel sind Gase, die gegenüber dem Kunststoff inert sind. Besonders bevorzugt sind Luft, Stickstoff und Kohlendioxid, insbesondere Stickstoff.

Als Treibmittel können neben den vorstehenden Gasen auch chemische Treibmittel, so genannte "chemical blowing agents (CBA)" sowohl organischer als auch anorganischer Art eingesetzt werden. Geeignete Treibmittel sind zum Beispiel Azodicarbonamid (ADC), 4,4-Oxibisbenzolsulfonylhydrazid (OBSH), p-Toluolsulfonylhydrazid (TSH), 5-Phenylhydrazol (5-PT), p-Toluolsulfonylsemicarbazid (PTSS), Di-nitropentamethylentetramin (DNPT), Natriumbicarbonat (SBC), Zinkcarbonat (ZnCO₃) usw.

Bevorzugt werden als Treibmittel jedoch Gase eingesetzt. Um kleine und gleichmäßig verteilte Blasen mit einer gleichmäßigen Größe zu erhalten ist eine homogene Keimbildung notwendig. Hierzu sind ein hoher Druck, hohe Temperatur und ein großer Anteil an Treibmittel erforderlich. Starke Größenunterschiede in den Blasen und ungleichmäßig verteilte Blasen führen zu einer Verschlechterung der mechanischen Eigenschaften, d. h. der Schlagzähigkeit, der Sprödigkeit und der Dauerfestigkeit sowie der ästhetischen Eigenschaften.

Die Temperatur im Zylinder der Schneckenkolbenmaschine liegt in Abhängigkeit vom eingesetzten Kunststoff vorzugsweise im Bereich von 170 bis 280°C. Der Druck, bei dem das Treibmittel zugegeben wird liegt vorzugsweise bei mindestens 300 bar. Der Anteil am Treibmittel liegt vorzugsweise im Bereich von 0,1 bis 3 Gew.-%. Bei Verwendung eines Gases als Treibmittel, liegt der Anteil vorzugsweise im Bereich von 0,5 bis 1,5 Vol.-%.

Um einen hinreichend feinzelligen geschäumten Kern zu erzielen wird die treibmittelhaltige Polymerschmelze, insbesondere bei Verwendung eines Gases als Treibmittel, mit einem Druck von mindestens 300 bar in das Werkzeug eingespritzt.

Die Herstellung des geschäumten Kunststoffteils erfolgt üblicherweise mit Hilfe einer Spritzgussmaschine. Diese umfasst eine Schneckenkolbenmaschine mit einer axial verschiebbaren Schnecke sowie das Werkzeug, welches mit der Schneckenkolbenmaschine verbunden wird. In der Schneckenkolbenmaschine wird ein Polymergranulat aufgeschmolzen und auf den erforderlichen Druck komprimiert. Dies erfolgt im Allgemeinen mit Hilfe einer oder mehrerer Schnecken. Das für die Herstellung des Schaums erforderliche Treibmittel wird über eine Begasungsstelle in der Schneckenkolbenmaschine zugegeben. Der Druck des zugegebenen Gases beträgt vorzugsweise mindestens 350 bar, der Druck der Schmelze an der Zugabestelle des Gases mindestens 300 bar. Damit das Gas in die Polymerschmelze gelangt und keine Polymerschmelze an der Begasungsöffnung aus dem Schneckenkolbenmaschine austreten kann, ist es erforderlich, dass der Druck, mit dem das Gas der Polymerschmelze zugegeben wird, mindestens genauso groß ist wie der Druck der Polymerschmelze. Durch die Zugabe des Treibmittels in die Polymerschmelze ist das Treibmittel in der gesamten Polymerschmelze enthalten. Um eine feste äußere Haut zu erzeugen, die kein Treibmittel enthält, ist es notwendig, das Treibmittel vor dem Einspritzen in die Kavität des Werkzeuges wieder zu entfernen.

Da das Werkzeug mit der Schneckenkolbenmaschine üblicherweise über einen Heißkanal verbunden ist, das heißt, einen Kanal, der beheizt werden kann, ist die erste Menge der Polymerschmelze zum Entgasen vorzugsweise im Heißkanal des Werkzeuges enthalten. Vorteil dieser Ausführungsform ist es, dass eine dem Fachmann bekannte herkömmliche Schneckenkolbenmaschine, wie sie in Spritzgussmaschinen eingesetzt wird, verwendet werden kann, ohne diese derart modifizieren zu müssen, dass die Polymerschmelze in der Schneckenkolbenmaschine entgast wird.

Damit die erste Menge der treibmittelhaltigen Polymerschmelze im Heißkanal entgast werden kann, umfasst der Heißkanal vorzugsweise eine Entgasungsöffnung. Vorzugsweise ist während des Entgasens in Schritt (a) der Heißkanal auf der Seite der Formkavität und auf der Zufuhrseite, das heißt der Seite, auf der die treibmittelhaltige Polymerschmelze dem Heißkanal zugeführt wird, verschlossen und die Entgasungsöffnung ist freigegeben. Über die Entgasungsöffnung kann die im Heißkanal enthaltene Polymerschmelze expandieren und das darin enthaltene Gas bzw. Treibmittel tritt aus. Es wird eine treibmittelfreie Polymerschmelze erzielt, aus welcher die äußere feste Haut des Kunststoffteiles gebildet werden kann.

Die Entgasungsöffnung gibt bevorzugt eine Entgasungskavität im Werkzeug frei. Die Entgasungskavität ist eine beliebig geformte Kavität, in welche ein Teil der im Heißkanal enthaltenen treibmittelhaltigen Polymerschmelze beim Entgasen austreten kann.

Damit nach dem Entgasen der ersten Menge der treibmittelhaltigen Polymerschmelze beim Einspritzen der Polymerschmelze in die Formkavität des Werkzeuges in Schritt (b) keine Schmelze mehr in die Entgasungskavität eingespritzt wird, ist es bevorzugt, dass zum Einspritzen der Polymerschmelze in die Formkavität in Schritt (b) der Heißkanal auf der Zufuhrseite der treibmittelhaltigen Polymerschmelze und auf der Seite der Formkavität geöffnet ist und die Entgasungsöffnung verschlossen ist. Dadurch, dass die erste Menge der treibmittelhaltigen Polymerschmelze im Heißkanal entgast worden ist, wird beim Einspritzvorgang als erstes diese entgaste Polymerschmelze in die Formkavität eingespritzt. Die treibmittelhaltige Polymerschmelze wird dann anschließend nachgeführt. Die entgaste Polymerschmelze legt sich beim Einspritzen an der Wandung der Formkavität an. Hierdurch wird die Außenhaut gebildet. Die treibmittelhaltige Polymerschmelze wird auf diese Weise von der entgasten Polymerschmelze umschlossen.

Damit die treibmittelhaltige Polymerschmelze nach dem Einspritzen aufschäumen kann, wird zum Aufschäumen in Schritt (c) die Formkavität vergrößert. Durch die Vergrößerung der Formkavität nimmt der Druck in der Formkavität ab. Das in der Polymerschmelze enthaltene Treibmittel dehnt sich aus. Durch die Ausdehnung des Treibmittels bilden sich in der Polymerschmelze Blasen. Ein Schaum entsteht. Dadurch, dass in der entgasten ersten Menge kein Treibmittel mehr enthalten ist, entstehen in dieser ersten Menge auch bei Druckabnahme keine Blasen. Die erste Menge bildet somit eine durchgehende, im Wesentlichen blasenfreie Schicht, die äußere feste Haut des geschäumten Kunststoffteiles.

Die Menge der entgasten ersten Menge der Polymerschmelze ist davon abhängig, wie dick die Haut werden soll. Im Allgemeinen liegt das Volumen der in Schritt (a) entgasten ersten Menge der Polymerschmelze im Bereich von 5 bis 80 %, bevorzugt von 10 bis 60 %, insbesondere von 15 bis 35 % des gesamten in die Formkavität eingespritzten Volumens vor der Entspannung. Da sich die zweite Menge der treibmittelhaltigen Polymerschmelze aufgrund des darin enthaltenen Treibmittels nach dem Einspritzen aufschäumt, vergrößert sich deren Volumen. Im fertigen geschäumten Kunststoffteil ist der Anteil der entgasten Menge, die die äußere Haut bildet, somit kleiner als die ursprünglich eingespritzten 5 bis 80 %. Am fertigen Bauteil nimmt die entgaste erste Menge der Polymerschmelze, die die äußere Haut bildet, abhängig von der Volumenzunahme während des Aufschäumens, ein Volumen von 2 bis 75 %, bevorzugt 3 bis 55 %, insbesondere 5 bis 30 % des gesamten geschäumten Kunststoffteils ein.

Vor dem Durchführen von Schritt (a), das heißt dem Entgasen der ersten Menge der treibmittelhaltigen Polymerschmelze, wird eine Kunststoffhartkomponente in ein Teil der Formkavität eingespritzt. Die Kunststoffkomponente bildet eine äußere Haut, die zumindest einen Teil des geschäumten Kunststoffteiles umschließt. Die Kunststoffkomponente ist teilweise ausgehärtet, bevor die Polymerschmelze in Schritt (b) in die Formkavität eingespritzt wird.

Als Kunststoffkomponente eignen sich zum Beispiel Polyolefine, wie Polypropylen (PP) oder Polyethylen (PE), Polyamide (PA), Styrol- und Acryl-Copolymere, wie AcrylnitrilButadien-Styrol-Copolymer (ABS), Styrol-Acrylnitril-Copolymer (SAN, SNA), Acrylnitril-Styrolacrylestercopolymer (ASA), Polyester, zum Beispiel Polybutylentereptalat (PBT), Polyethylentereptalat (PET), Polycarbonate (PC) sowie sämtliche Legierungen zwischen diesen und Verbindungen.

Um ein geschäumtes Kunststoffteil herzustellen, welches sowohl aus der Kunststoffkomponente als auch der treibmittelhaltigen Polymerschmelze hergestellt wird, wird zum Beispiel eine Spritzgussmaschine mit Drehtellerwerkzeug eingesetzt. Eine derartige Spritzgussmaschine umfasst im Allgemeinen für jede Kunststoffkomponente, die in das Werkzeug eingespritzt wird, eine Schneckenkolbenmaschine sowie ein Werkzeug, welches auf einem Drehteller angeordnet ist. Die Schneckenkolbenmaschinen sind vorzugsweise radial um das Werkzeug angeordnet. Das Werkzeug wird mit seiner Befüllöffnung zu der Schneckenkolbenmaschine platziert, aus welcher die nächste Kunststoffkomponente in das Werkzeug eingespritzt werden soll. Nach Abschluss des Einspritzvorganges wird das Werkzeug mit seiner Befüllöffnung zu der Schneckenkolbenmaschine weitergedreht, aus welcher die nächste Komponente eingespritzt wird. Bei zwei Komponenten sind die Schneckenkolbenmaschinen vorzugsweise gegenüberliegend angeordnet. Neben der vorstehend beschriebenen Spritzgussmaschine mit Drehtellerwerkzeug ist jedoch auch jede andere Maschine einsetzbar, mit der mehrere Kunststoffkomponenten in ein Werkzeug eingespritzt werden können. Derartige Maschinen sind dem Fachmann bekannt.

Eine Vorrichtung zur Herstellung eines geschäumten Kunststoffteils, umfasst ein Werkzeug mit einer Formkavität, die mit einem Heißkanal verbunden ist, durch den die Formkavität mit einer treibmittelhaltigen Polymerschmelze befüllbar ist. Der Heißkanal weist eine verschließbare Entgasungsöffnung auf. Durch die verschließbare Entgasungsöffnung lässt sich die im Heißkanal enthaltene Polymerschmelze entgasen, sofern die Entgasungsöffnung geöffnet ist. Um die Polymerschmelze in die Formkavität des Werkzeuges einspritzen zu können wird die Entgasungsöffnung verschlossen, damit kein Polymer aus der Entgasungsöffnung austreten kann.

Die Entgasungsöffnung mündet bevorzugt in eine Entgasungskavität im Werkzeug. Beim Entgasen der im Heißkanal enthaltenen Polymerschmelze tritt ein Teil der Polymerschmelze in die Entgasungskavität aus. Nach dem Öffnen des Werkzeuges kann die in der Entgasungskavität ausgehärtete Polymerschmelze entnommen werden und erneut dem Prozess zugeführt werden.

Um zu vermeiden, dass während des Entgasens der Polymerschmelze im Heißkanal weitere Polymerschmelze in den Heißkanal nachströmt und Polymerschmelze aus dem Heißkanal in die Formkavität austritt, ist der Heißkanal vorzugsweise an der Zufuhrseite für die treibmittelhaltige Polymerschmelze und auf der der Formkavität zugewandten Seite verschließbar. Zum Entgasen des treibmittelhaltigen Polymers, welches sich im Heißkanal befindet, wird somit der Heißkanal auf der Zufuhrseite der Polymerschmelze und auf der der Formkavität zugewandten Seite verschlossen. Um die Polymerschmelze in die Formkavität einzuspritzen wird anschließend der Heißkanal auf der Zufuhrseite der Polymerschmelze und auf der der Formkavität zugewandten Seite geöffnet. Es wird unter Druck stehende treibmittelhaltige Polymerschmelze über die Zufuhrseite in den Heißkanal nachgeführt, so dass aufgrund des Druckes die im Heißkanal enthaltene Polymerschmelze in die Formkavität eingespritzt wird. Zusätzlich wird auch weitere treibmittelhaltige Polymerschmelze durch den Heißkanal in die Formkavität eingespritzt. Der Einspritzdruck liegt vorzugsweise bei mehr als 300 bar.

Um eine ausreichend große Menge der treibmittelhaltigen Polymerschmelze entgasen zu können ist es bevorzugt, dass das Volumen des Heißkanals dem Volumen der treibmittelhaltigen Polymerschmelze entspricht, welche in Schritt (a) entgast wird. Das Volumen des Heißkanals beträgt im Allgemeinen 5 bis 80 % des Volumens des in die Formkavität eingespritzten Volumens vor dem Aufschäumen. Dieses Volumen entspricht dem abgeschlossenen Volumen, wenn der Heißkanal auf der der Zufuhrseite der treibmittelhaltigen Polymerschmelze und auf der Seite der Formkavität geschlossen ist.

Um das Volumen der Formkavität vergrößern zu können, damit die eingespritzte treibmittelhaltige Polymerschmelze aufschäumen kann, umfasst das Werkzeug im Bereich der Formkavität vorzugsweise mindestens einen Schieber, durch dessen Bewegung die Formkavität zum Aufschäumen der treibmittelhaltigen Polymerschmelze vergrößerbar ist. Hierzu wird der Schieber aus der Formkavität herausgefahren, so dass sich das Volumen der Formkavität vergrößert. Derartige Schieber sind dem Fachmann bekannt und werden bereits in Prozessen, bei denen geschäumte Kunststoffteile hergestellt werden, eingesetzt.

Im Folgenden werden anhand einer Zeichnung verschiedenen Varianten näher beschrieben, wobei die Zeichnung der Erfindung nicht entspricht. Darin zeigen:
Figur 1 ein ausgebildetes Werkzeug in einer ersten Variante,
Figur 2 ein ausgebildetes Werkzeug in einer zweiten Variante,
Figur 3 ein ausgebildetes Werkzeug in einer dritten Variante,
Figur 4 eine Vorrichtung in der dritten Variante, während der Einspritzphase,
Figur 5 die ausgebildete Vorrichtungsform der dritten Variante während der Entgasungsphase.

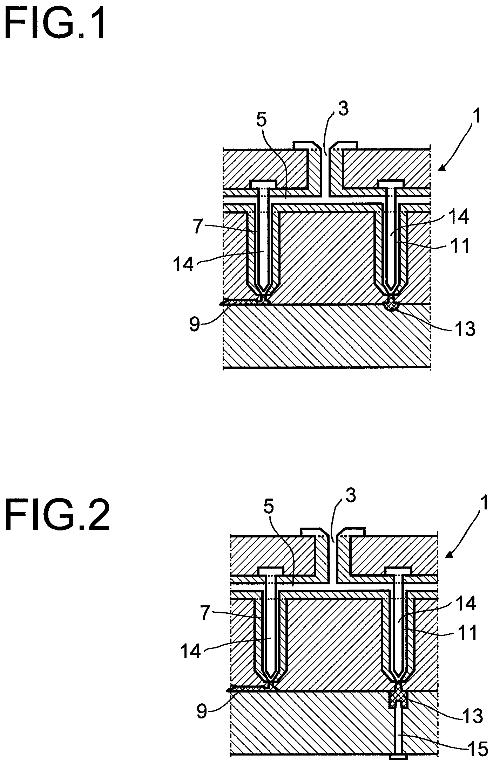

Figur 1 zeigt ein ausgebildetes Werkzeug in einer ersten Variante.

Ein Werkzeug 1 ist mit einer hier nicht dargestellten Maschine verbunden, mit welcher eine Polymerschmelze in das Werkzeug 1 eingespritzt wird. Hierzu ist die Maschine mit einer Zufuhröffnung 3 zu einem Heißkanal 5 verbunden. Die Zufuhröffnung 3 ist im Allgemeinen verschließbar, wobei das Mittel zum Verschließen der Zufuhröffnung 3 vorzugsweise an der Maschine ausgebildet ist. Hierbei handelt es sich zum Beispiel um einen Schieber. Der Heißkanal 5 ist über ein Düsensystem 7 mit einer Formkavität 9 verbunden, in welcher ein geschäumtes Kunststoffteil hergestellt wird. Die Formkavität 9 umfasst dazu mindestens einen hier nicht dargestellten Schieber, mit dem sich die Formkavität 9 vergrößern lässt, um ein Aufschäumen der eingespritzten Polymerschmelze zu ermöglichen.

Über einen zweiten Heißkanal 11 ist der Heißkanal 5 mit einer Entgasungskavität 13 verbunden. Die Entgasungskavität 13 bzw. der zweite Heißkanal 11 ist vorzugsweise verschließbar. Ebenso ist vorzugsweise das Düsensystem 7 bzw. die Formkavität 9 zum Heißkanal 5 hin verschließbar. Das Verschließen kann zum Beispiel durch ein Ventil oder einen Schieber erfolgen. Geeignete Mittel zum Verschließen der Formkavität 9 bzw. der Entgasungskavität 13 zum Heißkanal 5 sind dem Fachmann bekannt. In den hier dargestellten Ausführungsformen erfolgt das Verschließen der Formkavität 9 bzw. der Entgasungskavität 13 mittels eines axial im Düsensystem 7 verschiebbaren Ventilgliedes 14.

Um ein geschäumtes Kunststoffteil mit einer festen äußeren Haut herzustellen wird zunächst treibmittelhaltige Polymerschmelze über die Zufuhröffnung 3 in den Heißkanal 5 eingespritzt. Die Formkavität 9 ist verschlossen. Sobald der Heißkanal 5 befüllt ist wird die Zufuhröffnung 3 verschlossen. Die zuvor ebenfalls verschlossene Entgasungskavität 13 wird nun freigegeben. Die Polymerschmelze im Heißkanal 5 kann expandieren und wird über die Entgasungskavität 13 entgast. Nach dem Entgasen der im Heißkanal 5 enthaltenen Polymerschmelze wird die Entgasungskavität 13 verschlossen. Anschließend werden die Formkavität 9 und die Zufuhröffnung 3 freigegeben. Über die Zufuhröffnung 3 wird nun weitere treibmittelhaltige Polymerschmelze in den Heißkanal 5 eingespritzt. Die im Heißkanal 5 enthaltene entgaste Polymerschmelze strömt in die Formkavität 9. Sobald die entgaste Polymerschmelze vollständig in die Formkavität 9 eingespritzt wurde, gelangt auch treibmittelhaltige Polymerschmelze in die Formkavität 9. Hierzu wird weitere Polymerschmelze über die Zufuhröffnung 3 in das Werkzeug 1 eingespritzt. Das Einspritzen erfolgt dabei vorzugsweise bei einem Druck von mindestens 300 bar. Die treibmittelhaltige Polymerschmelze verdrängt die entgaste Polymerschmelze in der Formkavität 9 an die Außenwandung. Auf diese Weise bildet sich in der Formkavität 9 eine äußere Haut aus der entgasten Polymerschmelze und ein Kern aus der treibmittelhaltigen Polymerschmelze. Der Einspritzvorgang wird beendet, sobald die Formkavität 9 gefüllt ist und der Druck im Heißkanal 5 dem Druck der zugeführten Polymerschmelze entspricht. Zum Zuführen der Polymerschmelze wird üblicherweise eine Schneckenkolbenmaschine mit einer axial verschiebbaren Schnecke, wie sie dem Fachmann bekannt ist, eingesetzt. Üblicherweise wird in der Schneckenkolbenmaschine ein Granulat zunächst aufgeschmolzen und mit Hilfe der Schnecke, die rotiert und sich hierbei axial in Richtung der Aurgabestelle bewegt in einen sich dabei bildenden Raum vor der Schnecke gefördert. Das Einspritzen erfolgt durch eine axiale Verschiebung der Schnecke ohne Rotationsbewegung in den zuvor gebildeten Raum. Hierbei wird ein Druck auf die darin enthaltene Polymerschmelze ausgeübt und diese über die Zufuhröffnung 3 in das Werkzeug 1 eingespritzt. Neben der Schneckenkolbenmaschine ist jedoch auch jegliche andere, dem Fachmann bekannte Maschine geeignet, mit der sich eine Polymerschmelze über die Zufuhröffnung 3 in das Werkzeug 1 einspritzen lässt.
Nachdem die Formkavität 9 vollständig gefüllt ist wird die Formkavität 9 durch Verfahren des hier nicht dargestellten Schiebers oder der Öffnungsbewegung des Werkzeugs vergrößert. Hierbei nimmt der Druck in der Formkavität ab und das Treibmittel, welches in der Polymerschmelze enthalten ist, beginnt sich auszudehnen und Blasen zu bilden. Hierdurch schäumt die treibmittelhaltige Polymerschmelze, die den Kern des herzustellenden Kunststoffteiles bildet, auf. Es entsteht ein geschäumtes Kunststoffteil mit einer festen äußeren Haut. Die feste äußere Haut entsteht dadurch, dass hier die entgaste Polymerschmelze enthalten ist, die somit nicht mehr aufschäumen kann.

Figur 2 zeigt ein ausgebildetes Werkzeug in einer zweiten Variante.

Das in Figur 2 dargestellte Werkzeug 1 unterscheidet sich von dem gemäß Figur 1 dadurch, dass die Entgasungskavität 13 ein Entgasungsüberdruckventil 15 aufweist. Durch das Entgasungsüberdruckventil 15 kann der Gegendruck, bei dem entgast wird, eingestellt werden. So ist es zum Beispiel möglich, die Polymerschmelze, die im Heißkanal 5 enthalten ist langsam zu entgasen und so ein plötzliches Überschiessen von Polymerschmelze in die Entgasungsöffnung 13 zu vermeiden. Ein kontrollierter Entgasungsvorgang ist möglich.

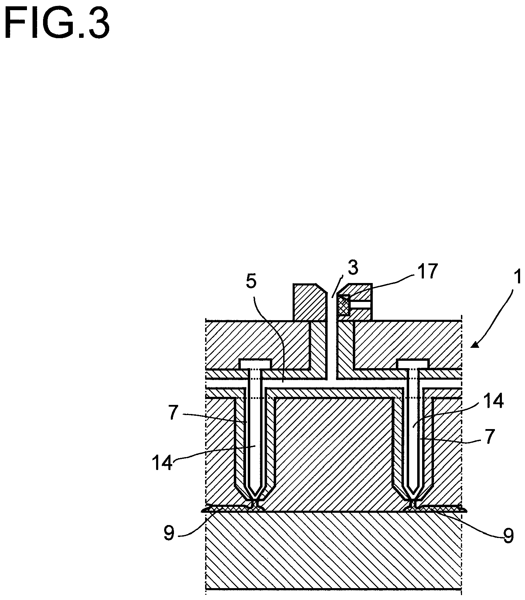

In Figur 3 ist ein ausgebildetes Werkzeug in einer dritten Variante dargestellt.

Die in Figur 3 dargestellte Variante unterscheidet sich von den in den Figuren 1 und 2 dargestellten Varianten dadurch, dass keine Entgasungskavität 13 vorgesehen ist. Die Entgasung erfolg über ein Entgasungsventil 17, welches im Bereich der Zufuhröffnung 3 für die Polymerschmelze angeordnet ist. Anstelle der Entgasungskavität 13 ist es möglich, bei dem in Figur 3 dargestellten Werkzeug 1 eine zusätzliche zweite Formkavität 9 auszubilden.

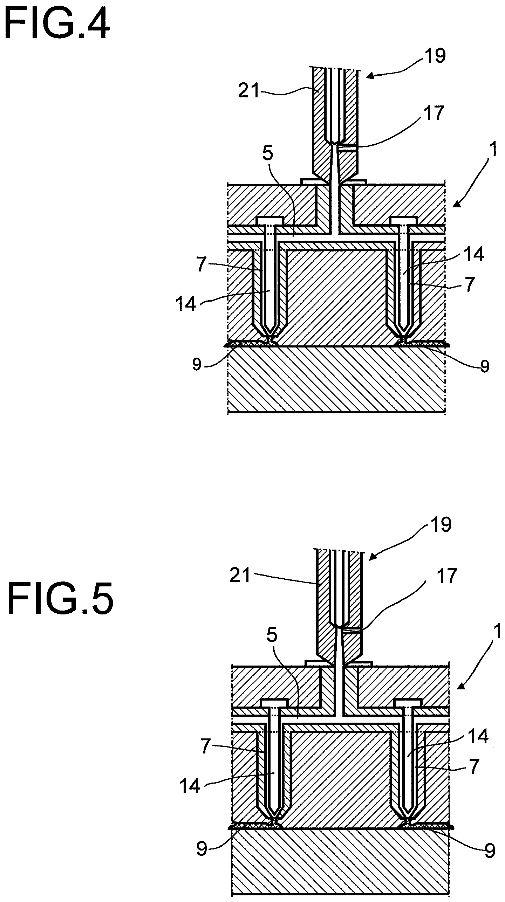

In Figur 4 ist der Einspritzvorgang mit dem in Figur 3 dargestellten Werkzeug dargestellt.

Das Werkzeug 1 ist mit einer Schneckenkolbenmaschine 19 verbunden. Die Schneckenkolbenmaschine 19 umfasst eine Einspritzdüse 21, die mit dem Werkzeug 1 verbunden ist. An die Einspritzdüse 21 schließt sich das Entgasungsventil 17 an. Zum Einspritzen ist das Entgasungsventil 17 verschlossen. Die Polymerschmelze strömt aus der Schneckenkolbenmaschine 19 über die Einspritzdüse 21 in den Heißkanal 5. Die Formkavität 9 ist zum Heißkanal 5 hin ebenfalls verschlossen. Durch das Einspritzen wird somit zunächst nur der Heißkanal 5 befüllt. Sobald der Heißkanal 5 befüllt ist wird die Einspritzdüse 21 verschlossen. Dies ist in Figur 5 dargestellt.

Das Entgasungsventil 17 wird geöffnet. Über das Entgasungsventil 17 wird die im Heißkanal 5 enthaltene Polymerschmelze entgast. Sobald der Entgasungsvorgang abgeschlossen ist wird das Entgasungsventil 17 wieder verschlossen. Die Einspritzdüse 21 und die Düsen des Düsensystems 17 werden geöffnet, so dass die Formkavitäten 9 freigegeben sind. Es wird Polymerschmelze aus der Schneckenkolbenmaschine 19 über die Einspritzdüse 21 weiter in das Heißkanalsystem 5 und von dort in die Formkavitäten 9 eingespritzt, bis diese vollständig befüllt sind. Nach dem Befüllen der Formkavitäten 9 wird wie bereits oben beschrieben die Formkavität 9 zum Beispiel durch Öffnen eines Schiebers vergrößert, so dass die darin enthaltene treibmittelhaltige Polymerschmelze aufschäumen kann. Ein geschäumtes Kunststoffteil mit festerer äußerer Haut entsteht.

Allen Varianten ist gemeinsam, dass die Form geöffnet wird und das geschäumte Kunststoffteil mit fester äußerer Haut entnommen wird, sobald der Kunststoff soweit erstarrt ist, dass eine Verformung des Kunststoffteiles nicht mehr möglich ist.

### Bezugszeichenliste

- 1: Werkzeug
- 3: Zuführöffnung
- 5: Heißkanal
- 7: Düsensystem
- 9: Formkavität
- 11: Zweiter Heißkanal
- 13: Entgasungskavität
- 14: Ventilglied
- 15: Entgasungsüberdruckventil
- 17: Entgasungsventil
- 19: Schneckenkolbenmaschine
- 21: Einspritzdüse

## Patentansprüche

1. Verfahren zur Herstellung von geschäumten Kunststoffteilen mit einer äußeren festen Haut und einem geschäumten Kern, wobei die äußere Haut und der geschäumte Kern aus dem gleichen Polymer gefertigt sind, folgende Schritte umfassend:
a) Entgasen einer ersten Menge einer treibmittelhaltigen Polymerschmelze,
b) Einspritzen der in Schritt (a) entgasten ersten Menge der Polymerschmelze und einer zweiten Menge der treibmittelhaltigen Polymerschmelze in eine Formkavität (9) in einem Werkzeug (1),
c) Aufschäumen der treibmittelhaltigen Polymerschmelze,
**dadurch gekennzeichnet, dass** die erste Menge der Polymerschmelze zum Entgasen in einem Heißkanal (5) des Werkzeugs (1) enthalten ist und dass vor dem Durchführen von Schritt (a) eine Kunststoffkomponente in ein Teil der Formkavität (9) eingespritzt wird, welche zumindest einen Teil des geschäumten Kunststoffteils als äußere Haut umschließt und die Kunststoffkomponente vor dem Durchführen von Schritt (b) zumindest teilweise ausgehärtet ist.

2. Verfahren nach Anspruch 1, **dadurch gekennzeichnet, dass** während des Entgasens in Schritt (a) der Heißkanal (5) auf der Seite der Formkavität und auf der Zufuhrseite der treibmittelhaltigen Polymerschmelze verschlossen ist und eine Entgasungsöffnung freigegeben ist.

3. Verfahren nach Anspruch 2, **dadurch gekennzeichnet, dass** die Entgasungsöffnung eine Entgasungskavität (13) im Werkzeug freigibt.

4. Verfahren nach Anspruch 2 oder 3, **dadurch gekennzeichnet, dass** zum Einspritzen der Polymerschmelze in die Formkavität (9) in Schritt (b) der Heißkanal (5) auf der Zufuhrseite der treibmittelhaltigen Polymerschmelze und auf der Seite der Formkavität (9) geöffnet ist und die Entgasungsöffnung verschlossen ist.

5. Verfahren nach einem der Ansprüche 1 bis 4, **dadurch gekennzeichnet, dass** das Volumen der in Schritt (a) entgasten ersten Menge der Polymerschmelze im Bereich von 5 bis 80 % des gesamten in die Formkavität (9) eingespritzten Volumens liegt.

6. Verfahren nach einem der Ansprüche 1 bis 5, **dadurch gekennzeichnet, dass** zum Aufschäumen in Schritt (c) die Formkavität (9) vergrößert wird.

7. Verfahren nach einem der Ansprüche 1 bis 6, **dadurch gekennzeichnet, dass** das in der treibmittelhaltigen Polymerschmelze enthaltene Treibmittel ein gegenüber dem Polymer inertes Gas ist.

## Claims

1. A method of producing foamed plastic parts having a solid outer skin and a foamed core, wherein the outer skin and the foamed core are made from the same polymer, including the following steps:
a) degassing a first amount of a blowing agent-containing polymer melt,
b) injecting the first amount of the polymer melt, that was degassed in step (a), and a second amount of the blowing agent-containing polymer melt into a mould cavity (9) in a tool (1), and
c) foaming up the blowing agent-containing polymer melt,
**characterised in that** the first amount of the polymer melt for degassing is contained in a hot runner (5) of the tool (1) and that prior to implementation of step (a) a plastic component is injected into a part of the mould cavity (9), which encloses at least a part of the foamed plastic part as an outer skin and the plastic component is at least partially hardened prior to implementation of step (b).

2. A method according to claim 1 **characterised in that** during degassing in step (a) the hot runner (5) is closed on the side of the mould cavity and on the feed side of the blowing agent-containing polymer melt and a degassing opening is opened.

3. A method according to claim 2 **characterised in that** the degassing opening opens a degassing cavity (13) in the tool.

4. A method according to claim 2 or claim 3 **characterised in that** for injection of the polymer melt into the mould cavity (9) in step (b) the hot runner (5) is opened on the feed side of the blowing agent-containing polymer melt and on the side of the mould cavity (9) and the degassing opening is closed.

5. A method according to one of claims 1 to 4 **characterised in that** the volume of the first amount of the polymer melt, that is degassed in step (a), is in the range of 5 to 80% of the total volume injected into the mould cavity (9).

6. A method according to one of claims 1 to 5 **characterised in that** the mould cavity (9) is increased in size for the foaming operation in step (c).

7. A method according to one of claims 1 to 6 **characterised in that** the blowing agent contained in the blowing agent-containing polymer melt is a gas which is inert in relation to the polymer.

## Revendications

1. Procédé de fabrication d'éléments en plastique expansé comportant une enveloppe externe solide et un coeur expansé, dans lequel l'enveloppe externe et le coeur expansé sont réalisés à partir du même polymère, comprenant les étapes suivantes :
a) le dégazage d'une première quantité d'une masse fondue de polymère contenant un agent propulseur,
b) l'injection de la première quantité de la masse fondue de polymère dégazée dans l'étape (a) et d'une deuxième quantité de la masse fondue de polymère contenant un agent propulseur dans une cavité de moule (9) dans un outil (1),
c) expansion de la masse fondue de polymère contenant un agent propulseur,
**caractérisé en ce que** la première quantité de la masse fondue de polymère est contenue pour le dégazage dans un canal chaud (5) de l'outil (1) et **en ce que**, avant la réalisation de l'étape (a), un composant de matière plastique est injecté dans une partie de la cavité de moule (9), qui entoure au moins une partie des éléments en plastique expansés en tant qu'enveloppe externe et le composant de matière plastique est durci au moins partiellement avant la réalisation de l'étape (b).

2. Procédé selon la revendication 1, **caractérisé en ce que**, pendant le dégazage à l'étape (a), le canal chaud (5) est fermé du côté de la cavité de moule et du côté de l'acheminement de la masse fondue de polymère contenant un agent propulseur et une ouverture de dégazage est libérée.

3. Procédé selon la revendication 2, **caractérisé en ce que** l'ouverture de dégazage libère une cavité de dégazage (13) dans l'outil.

4. Procédé selon la revendication 2 ou 3, **caractérisé en ce que** pour l'injection de la masse fondue de polymère dans la cavité de moule (9) à l'étape (b), le canal chaud (5) est ouvert sur le côté d'acheminement de la masse fondue de polymère contenant un agent propulseur et sur le côté de la cavité de moule (9) et l'ouverture de dégazage est fermée.

5. Procédé selon l'une des revendications 1 à 4, **caractérisé en ce que** le volume de la première quantité dégazée à l'étape (a) de la masse fondue de polymère se situe dans la plage de 5 à 80 % du volume injecté total dans la cavité de moule (9).

6. Procédé selon l'une des revendications 1 à 5, **caractérisé en ce que** pour l'expansion à l'étape (c), la cavité de moule (9) est agrandie.

7. Procédé selon l'une des revendications 1 à 6, **caractérisé en ce que** l'agent propulseur contenant la masse fondue de polymère contenant un agent propulseur est un gaz inerte par rapport au polymère.
